# EUROPÄISCHE PATENTANMELDUNG

(11) **EP 1 445 140 A1**
(43) Veröffentlichungstag der Anmeldung: **11.08.2004**
(21) Anmeldenummer: 03027237.1
(22) Anmeldetag: 28.11.2003
(51) Int. Cl.: B60K 17/346

(54) **Antriebsvorrichtung**

(30) Priorität: 06.02.2003 DE 10304811
(71) Anmelder: AUDI AG, 85045 Ingolstadt (DE)
(72) Erfinder: Meixner, Christian, 85049 Ingolstadt (DE)
(74) Vertreter: Asch, Konrad

(57) **Zusammenfassung**

Die Erfindung betrifft eine Antriebsvorrichtung für allradgetriebene Kraftfahrzeuge, mit einem Geschwindigkeits-Wechselgetriebe (12) und einem Zwischenachsdifferenzial (16) zur Abtriebsmomentenverteilung auf ein erstes und ein zweites Achsdifferenzial (14,19), über die die Vorderräder und die Hinterräder des Kraftfahrzeuges angetrieben werden, wobei eine Antriebswelle (30) des Wechselgetriebes (12) ein Antriebselement (32) des Zwischenachsdifferenziales (16) antreibt und Abtriebselemente (36,38) des Zwischenachsdifferenziales (16) mit den Achsdifferenzialen (14,19) trieblich verbunden sind und wobei eine die Abtriebsmomentenverteilung beeinflussende Kupplung (46) vorgesehen ist. Eine stufenlos variable Abtriebsmomentenverteilung weist die folgenden Merkmale auf: Die Abtriebsübersetzungsverhältnisse zwischen dem ersten und dem zweiten Achsdifferenzial (14,19) sind unterschiedlich; - die Auslegung des Zwischenachsdifferenziales (16) ist so, dass unterschiedliche Abtriebsmomente zu den Achsdifferenzialen (14,19) vorliegen, wobei das höhere Abtriebsmoment auf das kürzer übersetzte Achsdifferenzial (19) gelegt ist; - zwischen das Antriebselement (32) des Zwischenachsdifferenziales (16) und das Abtriebselement (38) mit dem höheren Abtriebsmoment ist eine schlupfgesteuerte Lamellenkupplung (46) eingeschaltet; und - die Lamellenkupplung (46) ist abhängig von Betriebsparametern des Kraftfahrzeuges zur variablen Verteilung der Abtriebsmomente des Zwischenachsdifferenziales (16) steuerbar.

## Beschreibung

Die Erfindung betrifft eine Antriebsvorrichtung für allradgetriebene Kraftfahrzeuge, gemäß dem Oberbegriff des Patentanspruches 1.

Allradantriebe sind in einer Vielzahl von Ausführungen bekannt, beispielsweise als permanenter Allradantrieb, als zuschaltbarer Allradantrieb, beispielsweise über eine Viskokupplung (Scherreibungskupplung), oder mit Antriebsmomentenverteilung mittels einer oder mehrerer elektrohydraulisch steuerbarer Lamellenkupplungen. Sofern bei solchen Allradantrieben eine Antriebsmomentenverteilung erfolgen soll, sind sie jedoch relativ kompliziert und steuerungstechnisch aufwändig ausgeführt. Ferner sind sie nicht bei vertretbarem Aufwand stufenlos variabel von z. B. hecklastig (Antriebsmoment verstärkt auf der Hinterachse) über neutral auf frontlastig umsteuerbar.

Aufgabe der Erfindung ist es, eine Antriebsvorrichtung der gattungsgemäßen Art vorzuschlagen, die mit relativ geringem baulichen und steuerungstechnischem Aufwand eine stufenlos variable Antriebsmomentenverteilung auf die vorderen und hinteren Räder des Kraftfahrzeuges ermöglicht.

Diese Aufgabe wird erfindungsgemäß mit den kennzeichnenden Merkmalen des Patentanspruches 1 gelöst. Vorteilhafte Weiterbildungen des erfindungsgemäßen Verfahrens beschreiben die weiteren Patentansprüche.

Die Lösung der gestellten Aufgabe basiert auf den folgenden Merkmalen:
- die Abtriebsübersetzungsverhältnisse zwischen dem ersten und dem zweiten Achsdifferenzial sind unterschiedlich;
- die Auslegung des Zwischenachsdifferenziales ist so, dass unterschiedliche Abtriebsmomente zu den Achsdifferenzialen vorliegen, wobei das höhere Abtriebsmoment auf das kürzer übersetzte Achsdifferenzial gelegt ist;
- zwischen das Antriebselement des Zwischenachsdifferenziales und das Abtriebselement mit dem höheren Abtriebsmoment ist eine schlupfgesteuerte Lamellenkupplung eingeschaltet; und
- die Lamellenkupplung ist abhängig von Betriebsparametern des Kraftfahrzeuges zur variablen Verteilung der Abtriebsmomente des Zwischenachsdifferenziales steuerbar.

Durch die beschriebenen Merkmale kann unter Verwendung nur einer schlupfgesteuerten Kupplung stufenlos variabel das Abtriebsmoment vom Zwischenachsdifferenzial zu den Achsdifferenzialen (= Antriebsmoment der Achsen) ausgehend von der konstruktiv vorgegebenen Grundverteilung (z. B. 70:30) in Neutral (50:50) und in eine umgekehrte Lastigkeit (z. B. 30:70 oder mehr) umgesteuert werden. Dabei ist es wesentlich, dass neben der konstruktiv vorgegebenen Grundverteilung des Zwischenachsdifferenziales durch die unterschiedlichen Übersetzungsverhältnisse der Achsdifferenziale die zu dem jeweiligen Achsdifferenzial führenden Abtriebswellen unterschiedliche Drehzahlen aufweisen. Dementsprechend wird durch zunehmende Übertragung von Abtriebsmoment über die schlupfgesteuerte Lamellenkupplung auf die stets langsamer drehende Antriebswelle die Grundverteilung steuerungstechnisch einfach und schnell in Richtung neutral und umgekehrte Grundverteilung verändert, wobei diese Steuerung von Betriebsparametern des Kraftfahrzeuges wie beispielsweise Geschwindigkeit, Fahrbahn-Zustand, -Steigungen oder -Gefälle, Schaltzustand des Wechselgetriebes etc. abhängig gesteuert wird.

Bevorzugt wird ferner vorgeschlagen, dass die kürzere Abtriebsübersetzung an dem die hinteren Räder des Kraftfahrzeuges antreibenden Achsdifferenzial ausgeführt ist und dass das höhere Abtriebsmoment des Zwischenachsdifferenziales auf dieses Achsdifferenzial geschaltet ist. Damit ist eine hecklastige Grundverteilung geschaffen, die insbesondere bei sportlich ausgelegten Kraftfahrzeugen fahrdynamische Vorteile bieten kann und die bei Bedarf jederzeit entsprechend variabel veränderbar ist.

Das Zwischenachsdifferenzial kann ein unsymmetrisch ausgelegtes Kegelraddifferenzial oder bevorzugt ein hinsichtlich der Abtriebsmomentenverteilung besser beherrschbares Planetengetriebe sein.

Eine baulich besonders gedrängte und hinsichtlich der Kombination mit einem herkömmlich allradgetriebenen Kraftfahrzeug eine problemlose Erweiterung zu einem variabel steuerbaren Allradantrieb ergebende Konstruktion ist dadurch gekennzeichnet, dass die trieblich mit dem Antriebselement des Zwischenachsdifferenziales verbundene Abtriebswelle des Wechselgetriebes eine Hohlwelle ist, die mit einer Kupplungsglocke das Planetengetriebe übergreifend die Lamellenkupplung trägt, wobei die Lamellenkupplung mit der einen Abtriebswelle des Zwischenachsdifferenziales kuppelbar ist und die andere Abtriebswelle im Rücktrieb durch die Hohlwelle verläuft. Daraus resultiert eine Art Patronenlösung, die ausgehend von einem herkömmlichen Wechselgetriebe des Kraftfahrzeuges mit integriertem Vorderachs-Differenzial und einem Zwischenachsdifferenzial nur durch Austausch des modifizierten Zwischenachsdifferenziales mit integrierter schlupfgesteuerter Lamellenkupplung einen Allradantrieb mit stufenlos variabler Antriebsmomentenverteilung ermöglicht.

Dabei kann zur Erzielung einer günstigen Abtriebsmomentenverteilung des Zwischenachsdifferenziales das Antriebselement des Planetengetriebes der Planetenradträger sein, während die Abtriebselemente durch das Sonnenrad und das Außenrad gebildet sind.

Des weiteren ist bevorzugt das Außenrad des Planetengetriebes mit dem höheren Abtriebsmoment mit dem kürzer übersetzten Achsdifferenzial für den Antrieb der hinteren Räder des Kraftfahrzeuges trieblich verbunden, wodurch eine besonders günstige Abtriebsmomentenverteilung innerhalb des Zwischenachsdifferenziales bei baulich einfacher Gestaltung und Anordnung des betreffenden Planetengetriebes gegeben.

Alternativ kann das Planetengetriebe ein Doppelplanetengetriebe sein, dessen radial innenliegende Planetenräder mit dem Sonnenrad und dessen außenliegende Planetenräder mit dem Außenrad kämmen, wobei ferner das in die Kupplungsglocke integrierte Außenrad das Antriebselement bildet und das Abtriebselement zum kürzer übersetzten Achsdifferenzial der Planetenradträger ist. Damit lässt sich bei relativ geringem Mehraufwand eine noch stärker differierende Grundverteilung des Abtriebsmomentes herstellen, die die Gesamtverstellbarkeit des Allradantriebes vorteilhaft zur noch besseren Anpassung an fahrdynamische Erfordernisse des Kraftfahrzeuges erweitert.

Bei entsprechenden steuerungstechnischen Maßnahmen z. B. über ein elektronisches Steuergerät und eine elektrohydraulische Steuerung der Lamellenkupplung kann diese abhängig von Betriebsparametern und/oder Fahrdynamikparametern so schlupfgesteuert sein, dass das Abtriebsmoment des Zwischenachsdifferenziales stufenlos von der konstruktiv vorgegebenen Abtriebsmomentenverteilung mit Vorrang zum einen Achsdifferenzial über eine neutrale Verteilung in eine Abtriebsmomentenverteilung mit Vorrang zum anderen Achsdifferenzial verstellbar ist.

Dabei können bevorzugt die Betriebsparameter mehrere elektronisch abgelegte Fahrprogramme eines automatischen Geschwindigkeits-Wechselgetriebes des Kraftfahrzeuges sein, bei deren Vorwählen unterschiedliche Abtriebsmomentenverteilungen des Zwischenachsdifferenziales durch entsprechende Ansteuerung der Lamellenkupplung vorgegeben sind. So kann beispielsweise bei einem Winterprogramm grundsätzlich mehr Antriebsmoment zu den Vorderrädern des Kraftfahrzeuges und bei einem Sportprogramm mehr Antriebsmoment zu den Hinterrädern gesteuert sein.

Des weiteren können besonders vorteilhaft modifizierte Fahrdynamik-Parameter in einem Steuergerät eines elektronischen Fahrstabilitätsprogrammes des Kraftfahrzeuges abgelegt sein und neben den bekannten Eingriffen wie Bremseneingriff und Antriebsmomentverringerung der Antriebsmaschine durch entsprechende zusätzliche Ansteuerung der Lamellenkupplung die Abtriebsmomentenverteilung des Zwischenachsdifferenziales in Richtung neutral und darüber hinaus verändern.

Ein Ausführungsbeispiel der Erfindung ist im Folgenden mit weiteren Einzelheiten näher beschrieben.

Die anliegende schematische Zeichnung zeigt in:
- **Fig. 1**: ein Blockschaltbild einer Antriebsvorrichtung für ein allradgetriebenes Kraftfahrzeug, mit einem Geschwindigkeits-Wechselgetriebe mit integriertem vorderen Achsdifferenzial, einem Zwischenachsdifferenzial und einem hinteren Achsdifferenzial;
- **Fig. 2**: das Zwischenachsdifferenzial gemäß Fig. 1 mit schlupfgesteuerter Lamellenkupplung und einfachem Planetengetriebe; und
- **Fig. 3**: ein modifiziertes Zwischenachsdifferenzial gemäß Fig. 1 mit einem Doppelplanetengetriebe.

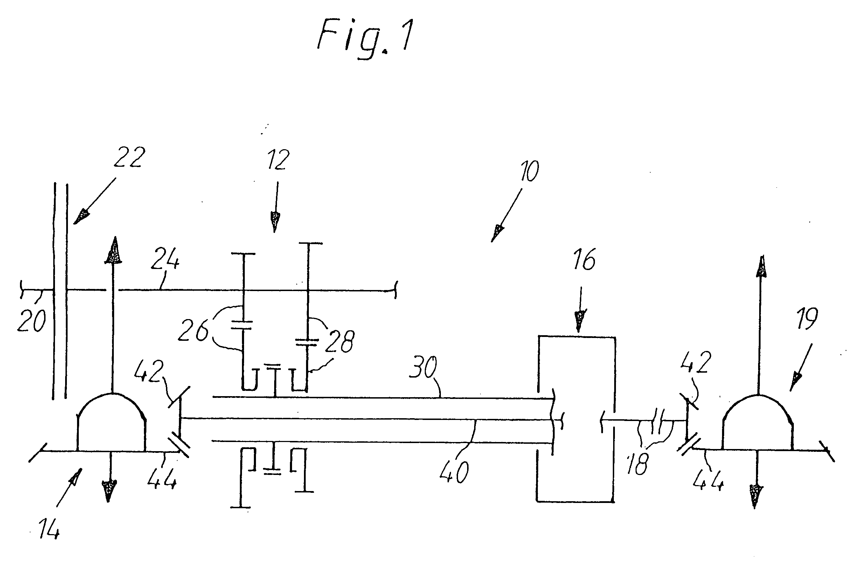

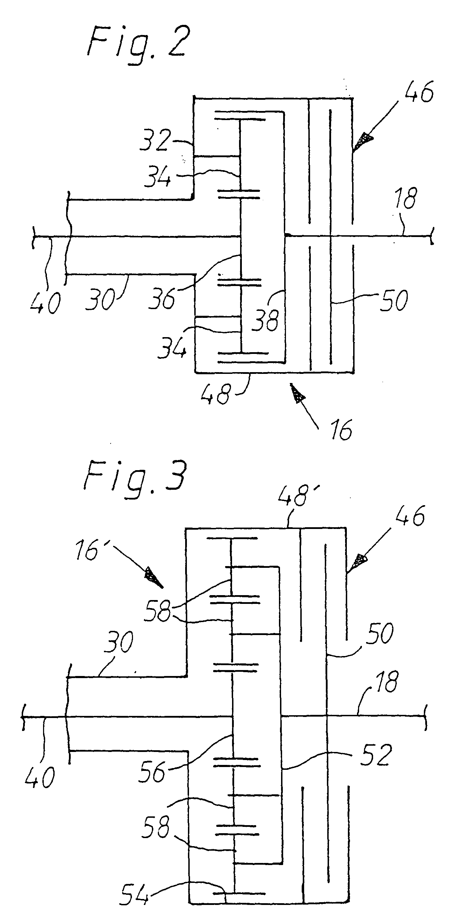

In der **Fig. 1** ist mit 10 die Antriebsvorrichtung für einen Allradantrieb für Kraftfahrzeuge bezeichnet, mit einem nur teilweise dargestellten Geschwindigkeits-Wechselgetriebe 12 mit einem integrierten Achsdifferenzial 14 zum Antrieb der vorderen Räder des Kraftfahrzeuges, einem ebenfalls integrierten Zwischenachsdifferenzial 16 (vgl. im Detail **Fig. 2 oder 3**) und einer Abtriebswelle 18 (z. B. eine Kardanwelle), die trieblich mit einem die hinteren Räder des Kraftfahrzeuges antreibenden Achsdifferenzial 19 verbunden ist.

Der Antriebsfluss verläuft von einer antreibenden Brennkraftmaschine mit einer Kraftabgabewelle 20 über eine Trennkupplung 22 auf die Getriebe-Eingangswelle 24 und über die nur teilweise dargestellten Gangstufen 26 oder 28 auf eine hohle Antriebswelle 30.

Die Antriebswelle 30 treibt das Zwischenachsdifferenzial 16 in noch zu beschreibender Weise an, während dessen Abtriebswellen 18, 40 über entsprechende Antriebsritzel 42 und Tellerräder 44 die besagten Achsdifferenziale 14, 19 treiben.

Die Achsdifferenziale 14 und 19, die beispielsweise Kegelraddifferenziale sind, weisen in sich unterschiedliche Übersetzungsverhältnisse auf (z. B. Tellerräder 44 mit unterschiedlichen Zähnezahlen), wobei das Übersetzungsverhältnis des hinteren Achsdifferenziales 19 kürzer relativ zum vorderen Achsdifferenzial 14 ausgelegt ist. Das heißt, dass bei schlupffreiem Abrollen der Vorderräder und Hinterräder des Kraftfahrzeuges (nicht dargestellt) die Abtriebswelle 18 relativ gesehen schneller dreht als die das vordere Achsdifferenzial 14 antreibende Abtriebswelle 40.

Gemäß **Fig. 2** ist das Zwischenachsdifferenzial 16 als einfaches Planetengetriebe ausgebildet, mit einem Planetenradträger 32 als Antriebselement, der über die Planetenräder 34 mit dem außenverzahnten Sonnenrad 36 und dem innenverzahnten Außenrad 38 trieblich verbunden ist.

Dabei ist das Sonnenrad 36 als das eine Abtriebselement auf der Abtriebswelle 40 angeordnet und treibt im Rücktrieb durch die hohle Antriebswelle 30 hindurch das vordere Achsdifferenzial 14 an, während die Abtriebswelle 18 mit dem anderen Abtriebselement des Planetengetriebes bzw. dem Außenrad 38 verbunden ist.

Die Auslegung des Zwischenachsdifferenziales 16 bzw. dessen Planetengetriebes ist so, dass in der konstruktiven Grundverteilung auf die Abtriebswelle 18 zu dem Achsdifferenzial 19 mit der kürzeren Antriebsübersetzung ein höheres Abtriebsmoment (70%) und auf die Abtriebswelle 40 zum vorderen Achsdifferenzial 14 ein niedrigeres Abtriebsmoment (30%) abgetrieben wird.

Ferner ist an das Zwischenachsdifferenzial 16 eine nur vereinfacht dargestellte Lamellenkupplung 46 angebaut, deren topfförmige Kupplungsglocke 48 das Planetengetriebe übergreifend fest mit dem Planetenradträger 32 verbunden ist und deren Kupplungslamellen 50 in bekannter Weise über nicht dargestellte Keilverzahnungen mit der Abtriebswelle 18 mit dem höheren Abtriebsmoment drehfest verbunden sind.

Die Lamellenkupplung 46 ist in nicht dargestellter und für sich bekannter Weise elektrohydraulisch (oder elektrisch) schlupfgesteuert betätigt und bewirkt eine stufenlos variable Veränderung der vorgegebenen Abtriebsmomentenverteilung des Zwischenachsdifferenziales 16.

Bei voll geöffneter Lamellenkupplung 46 ist diese ohne Einfluss und das Abtriebsmoment des Zwischenachsdifferenziales 16 ist wie vorgenannt mit Vorrang auf die hinteren Räder des Kraftfahrzeuges. Die Drehzahldifferenz der beiden Abtriebswellen 18, 40 wird im Zwischenachsdifferenzial 16 über die Planetenräder 34 in sich ausgeglichen.

Soll die Abtriebsmomentenverteilung des Zwis,chenachsdifferenziales 16 aufgrund definierter, noch zu beschreibender Betriebsparameter des Kraftfahrzeuges von der hecklastigen Grundverteilung von z. B. 70:30 auf neutral (50:50) oder auf frontlastig (z. B. 30:70) stufenlos verändert werden, so wird die Lamellenkupplung 46 zunehmend (aber stets im Schlupfbereich) geschlossen, wodurch aufgrund der vorliegenden Drehzahldifferenz Abtriebsmoment zunehmend von der Abtriebswelle 18 über die Planetenräder 34 des Planetenradträgers 32 auf das Sonnenrad 36 bzw. auf die Abtriebswelle 40 verlagert wird.

Die Schlupfsteuerung oder Schlupfregelung der Lamellenkupplung 46 erfolgt über ein nicht dargestelltes elektronisches Steuergerät, welches abhängig von Betriebs- und Fahrdynamik-Parametern den Kupplungsschlupf zur variablen Veränderung der Abtriebsmomente des Zwischenachsdifferenziales 16 steuert, wobei das Steuergerät eine entsprechende hydraulische Betätigungseinrichtung mit einer Druckmittelquelle und einem Stellzylinder ansteuert.

Das Steuergerät wertet dabei u.a. sowohl Signale von einem Fahrprogramm-Wählschalter des Wechselgetriebes 12 als auch Signale von einem Steuergerät eines Fahrstabilitätsprogrammes des Kraftfahrzeuges derart aus, dass bei einem Einlegen eines Sportprogrammes des ggf. automatischen Wechselgetriebes 12 eine größere Hecklastigkeit des Allradantriebs (geringerer Schlupfeingriff der Lamellenkupplung 46) vorliegt als beispielsweise bei einem Winterprogramm mit entsprechend angenommener vorsichtigerer Fahrweise bei mehr neutraler Momentenverteilung.

Neben dem Bremseneingriff und/oder einer Antriebsmomentenreduzierung an der Brennkraftmaschine kann das Fahrstabilitätsprogramm bzw. dessen Steuergerät ebenfalls in die Schlupfsteuerung der Lamellenkupplung 46 eingreifen und bei beginnender Instabilität des Kraftfahrzeuges (erkennbar z. B. über einen Gierwinkelsensor des Fahrstabilitätsprogrammes) die Abtriebsmomentenverteilung des Zwischenachsdifferenziales 16 in Richtung neutral schnell und wirkungsvoll verändern.

Gleiches gilt auch für Fahrbahnbeschaffenheiten, Fahrgeschwindigkeit, Brems- und/oder Beschleunigungszustände, etc. des Kraftfahrzeuges.

Bei dem Zwischenachsdifferenzial 16' gemäß **Fig. 3** ist anstelle des einfachen Planetengetriebes ein Doppelplanetengetriebe wie folgt verwendet. Gleiche Teile sind mit gleichen Bezugszeichen versehen.

Dabei ist die Abtriebswelle 18 für den Antrieb des hinteren Achsdifferenziales 19 mit dem Planetenträger 52 als dem einen Ausgangselement des Planetengetriebes trieblich verbunden.

Des weiteren bildet die Kupplunsglocke 48' der Lamellenkupplung 46 durch Einarbeitung einer entsprechenden Innenverzahnung das Außenrad 54 als Antriebselement des Doppelplanetengetriebes.

Das weitere Ausgangselement ist das Sonnenrad 56, das über die Abtriebswelle 40 mit dem vorderen Achsdifferenzial 14 verbunden ist.

Der Planetenradträger 52 trägt auf entsprechenden Drehzapfen radial zueinander versetzte und miteinander kämmende Planetenräder 58, von denen die radial innenliegenden Planetenräder 58 mit dem Sonnenrad 56 und die radial außenliegenden Planetenräder 58 mit dem Außenrad 54 bzw. der Kupplungsglocke 48'der Lamellenkupplung 46 kämmen. Die Kupplungslamellen 50 sind wie ersichtlich mit der Abtriebswelle 18 drehschlüssig gekoppelt.

Dies ermöglicht in an sich bekannter Weise eine stärkere Differenz in der Abtriebsmomentenverteilung des Zwischenachsdifferenziales 16' und einen damit beträchtlich erweiterten Verstellbereich des variablen Abtriebsmomentes. Im übrigen ist die Funktion des Zwischenachsdifferenziales 16' wie vorbeschrieben.

Die Erfindung ist nicht auf die beschriebenen Ausführungsbeispiele beschränkt. So können die unterschiedlichen Antriebsübersetzungen der Achsdifferenziale 14, 19 auch durch zusätzliche Getriebe (z. B. ein Vorgelege) oder ggf. sogar durch unterschiedliche Reifengrößen an den Vorderrädern und Hinterrädern des Kraftfahrzeuges geschaffen werden. Die Schlupfsteuerung der Lamellenkupplung 46 kann auch als Differenzialsperre eingesetzt sein, jedoch muss ein Restschlupf an der Lamellenkupplung 46 stets sichergestellt sein.

## Patentansprüche

1. Antriebsvorrichtung für allradgetriebene Kraftfahrzeuge, mit einem Geschwindigkeits-Wechselgetriebe und einem Zwischenachsdifferenzial zur Abtriebsmomentenverteilung auf ein erstes und ein zweites Achsdifferenzial, über die die Vorderräder und die Hinterräder des Kraftfahrzeuges angetrieben werden, wobei eine Antriebswelle des Wechselgetriebes ein Antriebselement des Zwischenachsdifferenziales antreibt und Abtriebselemente des Zwischenachsdifferenziales mit den Achsdifferenzialen trieblich verbunden sind und wobei eine die Abtriebsmomentenverteilung beeinflussende Kupplung vorgesehen ist, **gekennzeichnet durch folgende Merkmale**:
- die Abtriebsübersetzungsverhältnisse zwischen dem ersten und dem zweiten Achsdifferenzial (14, 19) sind unterschiedlich;
- die Auslegung des Zwischenachsdifferenziales (16; 16') ist so, dass unterschiedliche Abtriebsmomente zu den Achsdifferenzialen (14, 19) vorliegen, wobei das höhere Abtriebsmoment auf das kürzer übersetzte Achsdifferenzial (19) gelegt ist;
- zwischen das Antriebselement (32; 54) des Zwischenachsdifferenziales (16; 16') und das Abtriebselement (38; 52) mit dem höheren Abtriebsmoment ist eine schlupfgesteuerte Lamellenkupplung (46) eingeschaltet; und
- die Lamellenkupplung (46) ist abhängig von Betriebsparametern des Kraftfahrzeuges zur variablen Verteilung der Abtriebsmomente des Zwischenachsdifferenziales (16; 16') steuerbar.

2. Vorrichtung nach Anspruch 1, **dadurch gekennzeichnet, dass** die kürzere Abtriebsübersetzung an dem die hinteren Räder des Kraftfahrzeuges antreibenden Achsdifferenzial (19) ausgeführt ist und dass das höhere Abtriebsmoment des Zwischenachsdifferenziales (16;) auf dieses Achsdifferenzial (19) geschaltet ist.

3. Vorrichtung nach Anspruch 1 oder 2, **dadurch gekennzeichnet, dass** das Zwischenachsdifferenzial (16; 16') ein Planetengetriebe ist.

4. Vorrichtung nach einem oder mehreren der vorhergehenden Ansprüche, **dadurch gekennzeichnet, dass** die trieblich mit dem Antriebselement (32, 54) des Zwischenachsdifferenziales (16; 16') verbundene Antriebswelle (30) des Wechselgetriebes (12) eine Hohlwelle ist, die mit einer Kupplungsglocke (48) das Planetengetriebe übergreifend die Lamellenkupplung (46) trägt, wobei die Lamellenkupplung (46) mit der einen Abtriebswelle (18) des Zwischenachsdifferenziales (16; 16') kuppelbar ist und die andere Abtriebswelle (40) im Rücktrieb durch die hohle Antriebswelle (30) verläuft.

5. Vorrichtung nach einem oder mehreren der Ansprüche 1 bis 4, **dadurch gekennzeichnet, dass** das Antriebselement des Planetengetriebes der Planetenradträger (32) ist und dass die Abtriebselemente durch das Sonnenrad (36) und das Außenrad (38) gebildet sind.

6. Vorrichtung nach einem oder mehreren der Ansprüche 1 bis 5, **dadurch gekennzeichnet, dass** das Außenrad (38) des Planetengetriebes (16) mit dem höheren Abtriebsmoment mit dem kürzer übersetzten Achsdifferenzial (19) für den Antrieb der hinteren Räder des Kraftfahrzeuges trieblich verbunden ist.

7. Vorrichtung nach einem oder mehreren der Ansprüche 1 bis 4, **dadurch gekennzeichnet, dass** das Planetengetriebe ein Doppelplanetengetriebe (16') ist, dessen radial innenliegende Planetenräder (58) mit dem Sonnenrad (56) und dessen außenliegende Planetenräder (58) mit dem Außenrad (54) kämmen, dass ferner das in die Kupplungsglocke (48') integrierte Außenrad (54) das Antriebselement bildet und dass das Abtriebselement zum kürzer übersetzten Achsdifferenzial (19) der Planetenradträger (52) ist.

8. Vorrichtung nach einem oder mehreren der vorhergehenden Ansprüche, **dadurch gekennzeichnet, dass** die schlupfgesteuerte Lamellenkupplung (46) abhängig von Betriebsparametern und/oder Fahrdynamikparametern so gesteuert ist, dass das Abtriebsmoment des Zwischenachsdifferenziales stufenlos von der konstruktiv vorgegebenen Abtriebsmomentenverteilung mit Vorrang zum einen Achsdifferenzial (19) über eine neutrale Verteilung in eine Abtriebsmomentenverteilung mit Vorrang zum anderen Achsdifferenzial (14) verstellbar ist.

9. Vorrichtung nach einem oder mehreren der vorhergehenden Ansprüche, **dadurch gekennzeichnet, dass** die Betriebsparameter mehrere elektronisch abgelegte Fahrprogramme eines automatischen Geschwindigkeits-Wechselgetriebes des Kraftfahrzeuges sind, bei deren Vorwählen unterschiedliche Abtriebsmomentenverteilungen des Zwischenachsdifferenziales (16; 16') durch entsprechende Ansteuerung der Lamellenkupplung (46) vorgegeben sind.

10. Vorrichtung nach einem oder mehreren der vorhergehenden Ansprüche, **dadurch gekennzeichnet, dass** die Fahrdynamik-Parameter in einem elektronischen Fahrstabilitätsprogramm des Kraftfahrzeuges abgelegt sind und dass neben den bekannten Eingriffen wie Bremseneingriff und Antriebsmomentverringerung der Antriebsmaschine durch entsprechende zusätzliche Ansteuerung der Lamellenkupplung (46) die Abtriebsmomentenverteilung des Zwischenachsdifferenziales (16; 16') in Richtung neutral und ggf. darüber hinaus verändert wird.
